# DEMANDE DE BREVET EUROPEEN

(11) **EP 0 852 348 A1**
(43) Date de publication de la demande: **08.07.1998**
(21) Numéro de dépôt: 97403139.5
(22) Date de dépôt: 23.12.1997
(51) Int. Cl.: G05D 23/02, F02M 21/02, F02M 31/10

(54) **Thermostat, notamment destiné à être monté en aval d'un échangeur et en amont d'un moteur fonctionnant au gaz naturel**

(30) Priorité: 03.01.1997 FR 9700019
(71) Demandeur: RENAULT, 92109 Boulogne-Billancourt (FR)
(72) Inventeur: Blanchard, Eric, 92380 Garches (FR); Yu, Robert, 78990 Elancourt (FR)

(57) **Abrégé**

Thermostat (7) qui comprend des moyens (6,8,11,13,17,18) destinés à mettre un courant d'un premier fluide en contact d'échange de chaleur indirect avec un courant d'un second fluide et des moyens (25) sensibles à la température du premier fluide et appliquant, à partir d'une température donnée, une force appliquée à un clapet modifiant le débit du courant du second fluide.

## Description

L'invention concerne un thermostat, destiné notamment à être monté en aval d'un échangeur et en amont d'un moteur fonctionnant au gaz naturel.

L'invention vise un thermostat qui est peu encombrant, simple et fiable.

Suivant l'invention, le thermostat monté en aval de l'échangeur comprend des moyens sensibles à la température d'un premier fluide et appliquant, à partir d'une température donnée, une force à un clapet modifiant le débit du courant d'un second fluide, et donc l'échange thermique dans l'échangeur.

Réguler la température du premier fluide en faisant varier le débit du deuxième fluide par une liaison directe entre les moyens sensibles à la température et le clapet donne un système de régulation particulièrement simple et peu encombrant.

Suivant un mode de réalisation particulièrement simple et peu encombrant, les moyens de mise en contact comprennent une boîte subdivisée par une cloison en un premier et en un second compartiments, chacun muni d'un raccord d'entrée et d'un raccord de sortie, la cloison délimitant avec une enveloppe dans le premier compartiment une chambre, qui est emplie, à titre de moyens sensibles à la température, d'une substance changeant de volume en fondant et en contact avec un support d'un clapet du raccord d'entrée ou de sortie du second compartiment, le support étant monté, de manière étanche au liquide, mais avec possibilité de se déplacer lorsqu'il est poussé par la substance qui change de volume, dans une ouverture ménagée dans la cloison.

Pour tenir compte d'une grande différence de température entre les deux fluides, il peut être prévu un isolant entre la substance et la cloison thermiquement conductrice, afin que la substance ne soit sensible qu'à la température du premier fluide.

Suivant un mode de réalisation particulièrement bien adapté aux moteurs au gaz naturel, la substance est une cire, notamment une paraffine dont la température de fusion est comprise entre 0° et 90°C selon sa nature, avec en général une plage de température de fusion de 10°C environ. Une cire dont la fusion a lieu entre 20 et 30°C sera particulièrement préférée.

Il est préférable de prévoir des ailettes sur la face extérieure de l'enveloppe, afin d'améliorer le transfert de chaleur entre le premier fluide et la cire.

Pour permettre une bonne exposition de la cire au gaz entrant, le raccord d'entrée peut être disposé de manière à faire face à l'enveloppe, de préférence en étant décalé par rapport à l'enveloppe à l'opposé du raccord de sortie.

De préférence, le thermostat est fixé sur l'échangeur sans aucun conduit de connection. Le corps du thermostat peut être réalisé directement sur le corps de l'échangeur, formant ainsi un seul composant "échangeur-thermostat".

Enfin, l'invention vise également un système d'alimentation d'un moteur fonctionnant au gaz, dans lequel le thermostat suivant l'invention est monté entre le réservoir de stockage du gaz et le moteur.

Au dessin annexé, donné uniquement à titre d'exemple,
la Figure 1 est un schéma d'un circuit d'alimentation en gaz d'un moteur à gaz naturel suivant l'invention, et
la Figure 2 est une en coupe d'un thermostat suivant l'invention.

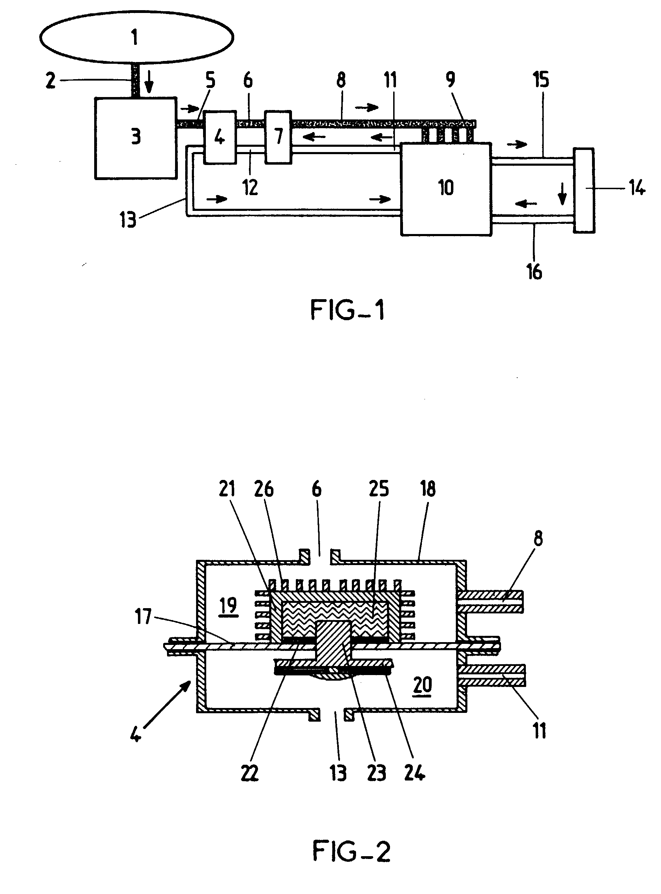

A la Figure 1,
un réservoir 1 de stockage de gaz, sous 200 bars, à 25°C est relié par un conduit 2 à un détendeur 3. Le détendeur 3 est relié à un échangeur 4 par l'intermédiaire d'un conduit 5 d'entrée de gaz. Un conduit 6 relie l'échangeur 4 au thermostat 7. Un conduit 8 de sortie de gaz relie le thermostat 7 aux injecteurs 9 d'un moteur 10 à gaz naturel.

Un conduit 11 de liquide de refroidissement relie le moteur 10 au thermostat 7, tandis qu'un conduit 12, sortant du thermostat 7 relie également celui-ci à l'échangeur 4 et un conduit 13, sortant de l'échangeur 4 relie au moteur 10.

Un radiateur 14 communique avec le moteur 10 par deux conduits 15, 16 d'aller et retour.

Lorsque le gaz passe du réservoir 1 au détendeur 3 par le conduit 2, il est détendu jusqu'à une pression de 9 bars. Le gaz est donc refroidi et il est nécessaire de le réchauffer à une température voisine de 25°C. Du détendeur 3, il passe alors successivement dans l'échangeur 4 et le thermostat 7 par les conduits 5 et 6, où il est chauffé par le liquide de refroidissement chaud arrivant du moteur 10 par les conduits 11 et 12 et ressortant de l'échangeur par le conduit 13 pour retourner au moteur 10. Le chauffage a lieu par l'échangeur 4.

Le thermostat est constitué d'une boîte 18 subdivisée en deux compartiments 18 et 20 par la cloison 17. Les conduits 6, 8 et 11, 13 débouchent respectivement dans les compartiments 19 et 20.

Une enveloppe 21 forme avec la cloison 17 une chambre 25 dans laquelle se trouve de la cire, une paraffine ayant un point de fusion de 25°C à ± 5°C, une couche 22 isolante thermiquement empêchant un contact thermique entre la cire et le compartiment 20 et un support 23 d'un clapet 24 de l'entrée du conduit 13. Le support 23 fait saillie dans la chambre 25 en étant en contact avec la cire et en traversant la cloison 17 et la couche 22 isolante de manière étanche au liquide de refroidissement mais de manière suffisamment lâche pour pouvoir se déplacer sous l'action de poussée de la cire.

Le gaz qui entre par le conduit 6, refroidi par le détendeur 3 circule sur l'enveloppe 21, éventuellement munie d'ailettes 26, et porte la cire à sa température. Le liquide de refroidissement chaud entrant par le conduit 11 circule dans le compartiment 20. Si la température du gaz qui est chauffé dans l'échangeur 4 vient à dépasser 25°C, la température de fusion de la cire, celle-ci fond et augmente de volume, ce qui pousse le clapet 24, par l'intermédiaire de son support 23, vers l'orifice du conduit 13, diminuant ainsi le débit de liquide de refroidissement, le transfert de chaleur chauffant le gaz diminue en sorte que sa température revient vers 25°C.

Si la température s'abaisse en dessous de 25°C, la cire se solidifie et se rétracte et ramène le support 23 vers l'intérieur de la chambre 25, augmentant ainsi le débit de liquide de refroidissement chaud.

On parvient ainsi à réguler la température du gaz aux alentours de 25°C.

Le conduit 6 débouche en face de l'enveloppe 21, en étant décalé vers la gauche de la figure, à l'opposé du conduit 8.

## Revendications

1. Thermostat (7) caractérisé en ce qu'il comprend des moyens (6,8,11,13,17,18) destinés à mettre un courant d'un premier fluide en contact d'échange de chaleur avec des moyens (25) sensibles à la température du premier fluide et appliquant, à partir d'une température donnée, une force à un clapet (24) modifiant le débit du courant d'un second fluide.

2. Thermostat (7) suivant la revendication 1, caractérisé en ce que les moyens (6,8,11,13,17,18) de mise en contact comprennent une boîte (18) subdivisée par une cloison (17) en un premier (19) et en un second (20) compartiments, chacun muni d'un raccord d'entrée et d'un raccord de sortie, la cloison (17) délimitant avec une enveloppe (21) dans le premier compartiment (18) une chambre, qui est emplie, à titre de moyens sensibles à la température, d'une substance (25) changeant de volume en fondant et en contact avec un support (23) d'un clapet (24) du raccord d'entrée ou de sortie du second compartiment (20), le support (23) étant monté, de manière étanche au liquide, mais avec possibilité de se déplacer lorsqu'il est poussé par la substance (25) qui change de volume, dans une ouverture ménagée dans la cloison (17).

3. Thermostat (7) suivant la revendication 2, caractérisé en ce qu'il est prévu un isolant (22) entre la substance (25) et la cloison (17).

4. Thermostat (7) suivant la revendication 2 ou 3, caractérisé en ce que la substance (25) est une cire, notamment une paraffine.

5. Thermostat (7) suivant la revendication 3 ou 4, caractérisé en ce que la substance (25) a un point de fusion compris entre 0 et 90°, de préférence entre 20°C et 30°C.

6. Thermostat (7) suivant la revendication 2, 3, 4 ou 5, caractérisé en ce qu'il est prévu des ailettes (26) sur la face extérieure de l'enveloppe (21).

7. Thermostat (7) suivant l'une des revendications 2 à 6, caractérisé en ce que le raccord d'entrée du premier compartiment (19) fait face à l'enveloppe (21) en étant décalé par rapport à celle-ci, à l'opposé du raccord de sortie.

8. Thermostat (7) suivant l'une des revendications 1 à 7, caractérisé en ce qu'il est fixé sur l'échangeur (4) sans aucun conduit de connection.

9. Thermostat (7) suivant l'une des revendications 1 à 8, caractérisé en ce que le corps (18) du thermostat (7) est réalisé directement sur le corps de l'échangeur (4), formant ainsi un seul composant "échangeur-thermostat".

10. Système d'alimentation d'un moteur fonctionnant au gaz naturel, dans lequel un thermostat (7) suivant l'une des revendications 1 à 9 est monté entre le réservoir (1) de stockage du gaz et le moteur (10).
